# EUROPÄISCHE PATENTSCHRIFT

(11) **EP 0 791 152 B1**
(45) Veröffentlichungstag und Bekanntmachung des Hinweises auf die Patenterteilung: **05.03.2003**
(21) Anmeldenummer: 96931038.2
(22) Anmeldetag: 06.09.1996
(51) Int. Cl.: F16K 31/00

(54) **VERFAHREN ZUR HERSTELLUNG EINES VENTILS**
METHOD FOR PRODUCING A VALVE
PROCEDE DE PRODUCTION D'UNE SOUPAPE

(30) Priorität: 08.09.1995 DE 29514495 U
(43) Veröffentlichungstag der Anmeldung: 27.08.1997
(73) Patentinhaber: Bürkert Werke GmbH & Co., D-74653 Ingelfingen (DE)
(72) Erfinder: KOWANZ, Bernd, D-74613 Öhringen (DE)
(74) Vertreter: Degwert, Hartmut, Dipl.-Phys.
(86) Internationale Anmeldenummer: EP9603920
(87) Internationale Veröffentlichungsnummer: WO97009555

(56) Entgegenhaltungen:
- EP-A- 0 128 447
- EP-A- 0 170 990
- EP-A- 0 565 510
- DE-A- 3 400 645

## Beschreibung

Die Erfindung betrifft ein Verfahren zur Herstellung eines Ventils mit einem Gehäuse, wenigstens einem darin gebildeten Dichtsitz und einer am Gehäuse freitragend an ihrem ersten Ende gelagerten piezoelektrischen Lamelle, deren zweites Ende den Dichtsitz je nach der an die Lamelle angelegten Steuerspannung verschließt oder freigibt und deren erstes Ende in einem Hohlraun des Gehäuses ragt und in diesem vergossen ist.

Bei einem aus der DE 34 00 645 C2 bekannten ventil ist das erste Ende der Lamelle zwischen zwei Gehäusehälften eingespannt und festgeklemmt und drückt im Ruhezustand mit dem zweiten Ende auf einen von zwei gegenüberliegenden Ventilsitzen. Da die Lage des zweiten Endes der Lamelle nicht exakt festgelegt ist und von den innerhalb von Toleranzen schwankenden Abmessungen der Teile, die zum Festklemmen des ersten Endes beitragen, abhängig ist, müssen die Dichtsitze nach dem Einklemmen des ersten Endes exakt justiert werden. Wenn sich nach einiger Zeit die mechanische Vorspannung der Lamelle durch mechanische Relaxation in ihrer Lagerung ändert, driften die zuvor justierten Parameter, so daß eine Nachjustierung erforderlich wird.

Ein weiteres Ventil mit einer piezoelektrischen Lamelle zeigt die EP 0 565 510 A2. Bei diesem bekannten Ventil wird die piezoelektrische Lamelle an ihrem eingespannten Ende durch eine Lenkerfeder gegen drei Stützlager gedrückt. Am anderen, freien Ende liegt die Lamelle mechanisch vorgespannt an einem Dichtsitz an, um diesen zu verschließen. Wird eine elektrische Spannung an die piezoelektrische Lamelle angelegt, so wird diese ausgelenkt, von ihrem Dichtsitz abgehoben und gegen einen zweiten, gegenüberliegenden Dichtsitz angelegt, um diesen zu verschließen. Bei Abschaltung oder Umpolung der elektrischen Spannung bewegt sich die Lamelle in ihre ursprüngliche Stellung zurück. Die piezoelektrische Lamelle wirkt somit unmittelbar als Schließkörper, der wechselweise an dem einen oder anderen Dichtsitz abdichtet. Um diese Funktion erfüllen zu können, muß die Lamelle im Gehäuse genau justiert und fixiert werden. Zu diesem Zweck sind sowohl die Dichtsitze als auch wenigstens eines der drei Stützlager verstellbar. Auch dieses Ventil muß nach einiger Zeit nachjustiert werden.

Ein Verfahren gemäß Oberbegriff der Ansprüche 1 und 3 ist bereits aus der EP-A-0 170 590 bekannt; Maßnahmen zur Justierung der Lamelle ist dort nicht offenbart.

Durch das erfindungsgemäße Verfahren gemäß den Patentansprüchen 1 und 3 wird ein Ventil mit piezoelektrischer Lamelle geschaffen, das keiner aufwendigen Justierung und nach längerem Gebrauch auch keiner Nachjustierung bedarf.

Je nachdem, welchen Ausgangszustand die Lamelle im elektrisch spannungslosen Zustand aufweisen soll, kann sie entweder nicht an dem Dichtsitz anliegen oder mit einer mechanischen Vorspannung an diesem anliegen. Die definierte mechanische Vorspannung wird so gewählt, daß sich die gewünschte Schließkraft am Dichtsitz einstellt.

Bei einer ersten Ausführungsform wird der Dichtsitz an einem in eine Bohrung des Gehäuses verschiebbar eingesetzten und nach Justierung am Gehäuse befestigten Röhrchen gebildet. Bei dieser Ausgestaltung ist es möglich, um eine definierte Vorspannung, mit der die Lamelle am Dichtsitz anliegt, einzustellen, zuerst die Lamelle ohne eine Vorspannung im Gehäuse zu positionieren und ihr erstes Ende zu vergießen. Anschließend wird ein axial verschiebbarer Dichtsitz unter vorbestimmter Kraft gegen das zweite Ende der Lamelle gedrückt, während an diese eine definierte elektrische Spannung angelegt ist, die zu einer kontrollierten Durchbiegung gegen den Dichtsitz fuhrt. In diesem Zustand kann dann der Dichtsitz am Gehäuse starr fixiert werden. Eine weitere Möglichkeit besteht darin, die Lamelle nach dem Einsetzen in das Gehäuse und vor ihrer Verankerung mechanisch, z.B. mittels eines auf ihr aufliegenden Gewichtes zu belasten und sie durchzubiegen. In diesem durchgebogenen Zustand wird dann die Vergußmasse eingebracht. Erst nach dem Aushärten der Vergußmasse wird die mechanische Belastung entfernt.

Die erfindungsgemäßen Verfahren zum Herstellen eines Ventilsitzes sehen entsprechend vor, daß das erste Ende der Lamelle durch Vergießen mit dem Gehäuse starr verbunden wird, wobei die Lamelle während des Vergießens relativ zum Gehäuse ortsfest gehalten wird. Dabei kann die Lamelle beispielsweise in ihrer elektrisch spannungslosen Ausgangsstellung positioniert und gehalten werden, die sie nach dem Erstarren der Vergußmasse einnimmt. Darüber hinaus ist es auch möglich, wie zuvor bereits beschrieben, das erste Ende der Lamelle zu vergießen, wenn an diese eine elektrische Spannung angelegt worden ist.

Die alternative Methode zum Aufbringen einer definierten mechanischen Vorspannung an der Lamelle besteht darin, deren erstes Ende zuerst ohne Vorspannung im Gehäuse zu positionieren, dieses dann starr durch Vergießen mit dem Gehäuse zu verbinden und den axial verschiebbaren Dichtsitz unter vorbestimmter Kraft gegen das andere Ende der Lamelle anzulegen oder den Dichtsitz bei vorbestimmter Gegenkraft durch die Lamelle verschieben zu lassen. Schließlich wird der in seine Endstellung bewegte Dichtsitz starr am Gehäuse fixiert.

Weitere Merkmale und Vorteile der Erfindung ergeben sich aus der folgenden Beschreibung und aus der Zeichnung, auf die Bezug genommen wird. In der Zeichnung zeigen:
Fig. 1 einen schematischen Längsschnitt eines Ventils mit piezoelektrischer Lamelle;
Fig. 2 einen Schnitt entlang Linie II-II in Fig. 1;
Fig. 3 eine Schnittansicht, die das Ventil in der Phase des Aufbringens der definierten mechanischen Vorspannung auf die Lamelle zeigt;
Fig. 4 eine zweite Ausführungsform des Ventils; und
Fig. 5 eine dritte Ausführungsform des Ventils.

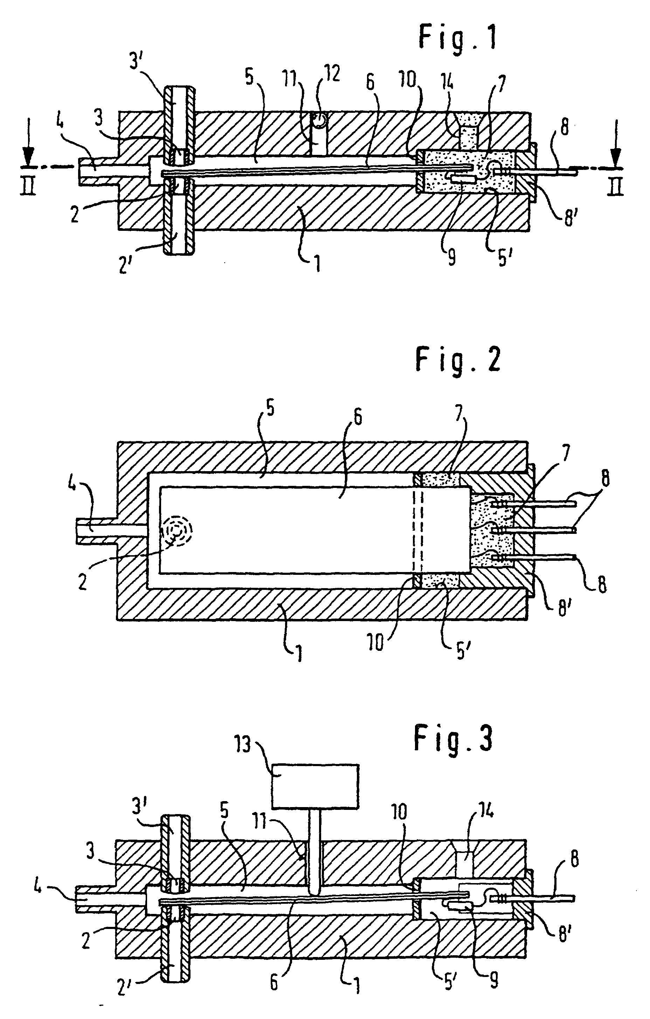

Bei den in den Figuren 1 und 2 gezeigten Ausführungsformen besteht das Ventil aus einem quaderförmigen Gehäuse 1, in dem ein Zuluftsitz 2 und ein Abluftsitz 3 fest, ohne Justiermöglichkeit, eingebaut sind. Zuluftsitz 2 und Abluftsitz 3 sind zur besseren Abdichtung als Einsätze aus Elastomer ausgeführt und in einem Zuluftanschluß 2' bzw. Abluftanschluß 3' befestigt. Der Innenraum 5 des Gehäuses 1 steht mit einem Signalausgang 4 in Verbindung. Eine piezoelektrische Lamelle 6 liegt einerseits mit einer gewissen mechanischen Vorspannung auf dem Zuluftsitz 2 auf und ist andererseits mit einer Vergußmasse 7 im Gehäuse 1 fixiert.

Die piezoelektrische Lamelle 6 ist durch Anschlußleitungen und einen optionalen Vorwiderstand 9 mit Kontaktstiften 8 verbunden. Auch diese Anschlußleitungen, der Vorwiderstand 9 und die Kontaktstifte 8 sind in der Vergußmasse 7 eingebettet und fixiert.

Das Gehäuse 1 weist an seinem vom Signalausgang 4 abgewandten Ende einen am Außenumfang ausmündenden Hohlraum 5' auf, in den die Vergußmasse 7 eingegossen wird. Dieser Hohlraum 5' ist in Richtung zum Signalausgang 4 hin durch eine Trennplatte 10 verschlossen; auf der gegenüberliegenden Seite ist er durch einen Sockel 8' verschlossen, der die Kontaktstifte 8 trägt.

Zur Montage des Ventils wird zunächst aus der piezoelektrischen Lamelle 6, der mit einem Durchführungsverschlitz für diese versehenen Trennplatte 10, den Anschlußleitungen, dem Vorwiderstand 9 und dem Sockel 8' mit den Kontaktstiften 8 eine Baugruppe gebildet, die dann durch den Hohlraum in das Gehäuse 1 eingeschoben wird. Die piezoelektrische Lamelle 6 wird dabei zunächst durch die Trennplatte 10 und den Sockel 8', der mit Schlitzen zur Aufnahme des Endes der Lamelle versehen ist, lose in der vorgesehenen Position gehalten. Etwa mittig über der Lamelle 6 ist das Gehäuse 1 mit einer Montagehilfsbohrung 11 versehen. Durch diese Montagehilfsbohrung 11 hindurch wird, wie in Fig. 3 gezeigt, ein durch ein Gewicht 13 belasteter Stift geführt, der auf der Lamelle 6 aufliegt und diese unter eine definierte Vorspannung setzt. Folglich stützt sich nun die Lamelle 6 an ihrem freien Ende mit einer definierten mechanischen Vorspannung auf dem Zuluftsitz 2 und auf der Trennplatte 10 ab, wobei sie geringfügig durchgebogen wird. Das vergossene erste Ende der Lamelle 6 ist dadurch nicht belastet.

Der in Fig. 3 mit 5' bezeichnete Hohlraum wird nun durch einen in dem Gehäuse 1 vorgesehenen Eingußkanal 14 mit flüssiger Vergußmasse 7, insbesondere Gießharz, vollständig ausgefüllt, wobei auch der Eingußkanal 14 mit Vergußmasse 7 gefüllt wird. Nach dem Aushärten der Vergußmasse 7 ist die Lamelle 6 in ihrer Lage fixiert. Anschließend wird das Gewicht 13 entfernt. Die Montagehilfsbohrung 11 wird mittels einer Kugel 12 druckdicht verschlossen. Das Ventil ist nun betriebsbereit.

Durch den beschriebenen Aufbau des Ventils wird der Vorteil erreicht, daß die mechanische Vorspannung der piezoelektrischen Lamelle 6 durch das Gewicht 13 mit hoher Genauigkeit vorgegeben werden kann. Maßtoleranzen am Gehäuse 1, an den Dichtsitzen 2, 3, der Trennplatte 10 und an der Lamelle 6 selbst, ebenso wie Formfehler dieser Lamelle 6, haben kaum einen Einfluß auf die definierte Vorspannung der Lamelle 6, so daß eine Justierung überflüssig ist.

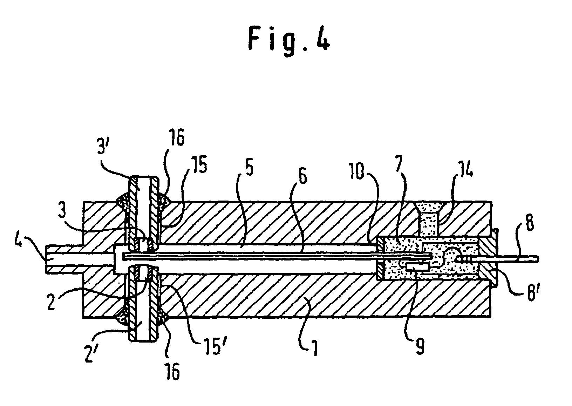

Bei der in Fig. 4 gezeigten Ausführungsform wird wiederum zunächst die mit dem Vorwiderstand 9 und dem Sockel 8' vorkonfektionierte Lamelle 6 mittels der Trennplatte 10 im Gehäuse positioniert. Anschließend wird der Hohlraum 5' des Gehäuses 1 mit Vergußmasse 7 gefüllt. Nach dem Aushärten der Vergußmasse ist die Lamelle 6 druckdicht im Gehäuse 1 festgelegt. Der Zuluftanschluß 3' mit Zuluftsitz 3 wird nun durch eine Montagebohrung 15 lose in das Gehäuse eingelegt und liegt unter seinem Eigengewicht auf der Lamelle 6 auf. Die genaue Position des Zuluftsitzes 3 kann nun durch Anlegen einer elektrischen Spannung an die Lamelle 6 - bevorzugt diejenige Spannung, bei welcher der Zuluftsitz 3 im späteren Betrieb geöffnet werden soll - vorgegeben werden. In der gewünschten Position wird der Zuluftsitz 3 nun durch Klebstoff 16 fixiert. Die Montage des Abluftsitzes 2 erfolgt in gleicher Weise durch eine weitere Montagebohrung 15' des Gehäuses 1, wobei an die piezoelektrische Lamelle 6 diejenige elektrische Spannung angelegt wird, die im späteren Betrieb zum Schließen des Abluftsitzes 2 vorgesehen ist. Nach dem Aushärten des Klebstoffs ist das Ventil betriebsbereit. Bei dieser Ausführungsform können die Betriebsspannungen, bei denen der Zuluftsitz 3 geöffnet bzw. der Abluftsitz 2 verschlossen wird, mit hoher Genauigkeit vorgegeben werden, ohne daß eine nachträgliche Justierung der Ventilsitze erforderlich ist. Maßtoleranzen am Gehäuse 1, an Ventilsitzen, Trennplatte 10 oder Lamelle 6 können durch die beschriebene Montage ebenso wie unterschiedliche Materialeigenschaften oder Biegekennlinien der Lamelle 6 kompensiert werden. Zur Erreichung der definierten Vorspannung kann der axial verschiebbare Abluftsitz 2 oder Zuluftsitz 3 unter Aufbringung einer vorbestimmten Kraft gegen die elektrisch belastete Lamelle 6 angedrückt werden oder die Dichtsitze 2, 3 werden von der sich durchbiegenden Lamelle 6 bei einer vorbestimmten Gegenkraft verschoben, so daß beide Dichtsitze 2, 3 in ihre endgültige Stellung gelangen, wo sie am Gehäuse 1 fixiert werden.

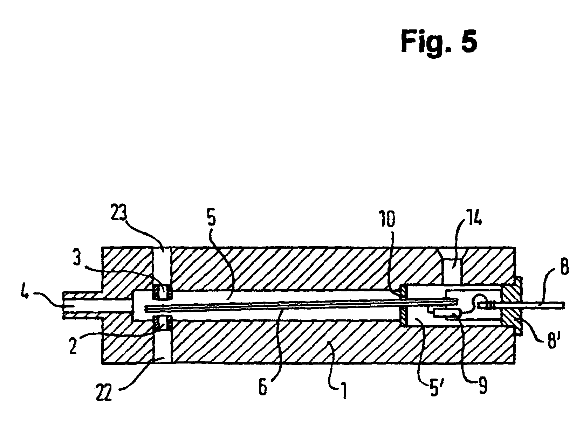

Die in Figur 5 gezeigte Ausführungsform entspricht im wesentlichen der in Figur 3 dargestellten, wobei jedoch in der gezeigten, elektrisch spannungsiosen Ausgangsstellung die Lamelle 6 an keinem der beiden gegenüberliegenden Dichtsitze 2, 3 anliegt. Um dennoch die Lage der Lamelle 6 in der elektrisch spannungslosen Ausgangsstellung zu definieren, wird die Lamelle 6 vor dem Vergießen auf den Dichtsitz 2 aufgelegt und eine definierte elektrische Spannung an die Lamelle 6 angelegt. Diese Spannung ist so gewählt, daß nach dem Aushärten der Vergußmasse 7 und nach dem Entfernen der Spannung ein definierter Abstand der Lamelle 6 vom Zuluftsitz 2 und vom Abluftsitz 3 vorhanden ist, wie in Figur 5 gezeigt. Im Gegensatz zu der in Figur 3 gezeigten Ausführungsform sind der Abluftsitz 2 und der Zuluftsitz 3 nicht als separate Röhrchen vorgesehen, sondern es sind lediglich entsprechende Bohrungen 22 und 23 vorhanden, in die Elastomerteile gepreßt werden, die die Dichtsitze 2, 3 für die Abluft bzw. Zuluft bilden.

## Patentansprüche

1. Verfahren zum Herstellen eines Ventils mit einem Gehäuse (1), wenigstens einem darin gebildeten Dichtsitz (2, 3) und einer am Gehäuse (1) freitragend an ihrem ersten Ende gelagerten piezoelektrischen Lamelle (6), deren zweites Ende den Dichtsitz (2, 3) je nach der an die Lamelle (6) angelegten Steuerspannung verschließt oder freigibt und deren erstes Ende in einen Hohlraum (5') des Gehäuses (1) ragt und in diesem vergossen wird, **dadurch gekennzeichnet, daß** die Lamelle (6) während des Vergießens relativ zum Gehäuse (1) ortsfest gehalten und zugleich mechanisch und/oder elektrisch belastet wird, wodurch eine definierte mechanische Vorspannung der Lamelle für ihre elektrisch spannungslose Ausgangsstellung eingestellt wird, mit der sie an dem Dichtsitz (2, 3) anliegt, oder ein definierter Abstand der Lamelle (6) vom Dichtsitz (2, 3) im Zustand ohne angelegte elektrische Spannung eingestellt wird.

2. Verfahren nach Anspruch 1, **dadurch gekennzeichnet, daß** sich etwa mittig über der Lamelle (6) ein Kanal (11) durch eine Wandung des Gehäuses (1) erstreckt, daß vor dem Vergießen durch diesen Kanal ein stiftförmiges Element (13) zur definierten Biegebeanspruchung der Lamelle (1) eingeführt wird und daß der Kanal (11) nach dem Erstarren der Vergußmasse (7) mittels eines Verschlußkörpers (12) wie einer eingepreßten Kugel (12) druckdicht verschlossen wird.

3. Verfahren zum Herstellen eines Ventils mit einem Gehäuse (1), wenigstens einem darin gebildeten Dichtsitz (2, 3) und einer am Gehäuse (1) freitragend an ihrem ersten Ende gelagerten piezoelektrischen Lamelle (6), deren zweites Ende den Dichtsitz (2, 3) je nach der an die Lamelle (6) angelegten Steuerspannung verschließt oder freigibt und deren erstes Ende in einen Hohlraum (5') des Gehäuses (1) ragt und in diesem vergossen wird, wobei die Lamelle (6) während des Vergießeus relativ zum gehäuse (1) ortsfest gehalten wird, **dadurch gekennzeichnet, daß** die Lamelle (6) nach dem Erstarren der Vergußmasse (7) elektrisch belastet und dadurch durchgebogen wird, daß der Dichtsitz (2, 3) axial verschiebbar im Gehäuse (1) gelagert ist, daß der Dichtsitz (2, 3) unter vorbestimmter Kraft gegen das andere Ende der Lamelle (6) angelegt wird oder daß er bei vorbestimmter Gegenkraft durch das andere Ende der Lamelle (6) in eine endgültige Stellung verschoben wird und daß der Dichtsitz (2, 3) schließbar starr am Gehäuse (1) fixiert wird.

4. Verfahren nach einem der Ansprüche 1 bis 3, **dadurch gekennzeichnet, daß** die Lamelle (6) mit einer Trennplatte (10), durch die der Hohlraum (5') auf seiner zum Inneren des Gehäuses (1) gelegenen Seite verschlossen ist, einem Halteschlitze für das erste Ende der Lamelle (6) aufweisenden Sockel (8'), welcher den am Außenumfang des Gehäuses (1) ausmündenden Hohlraum (5') verschließt, und mit Kontaktstiften (8) verbundenen Anschlußleitungen als vormontierte Baugruppe durch ein am Umfang des Gehäuses (1) offenes Ende des Hohlraumes (5') in diesen sowie in das Gehäuse (1) eingesetzt wird.

## Claims

1. A method of producing a valve having a housing (1), at least one sealing seat (2, 3) formed therein, and a piezoelectric lamina (6) cantilevered at its first end on the housing (1), with its second end closing or opening the sealing seat (2, 3) depending on the control voltage applied to the lamina (6), and with its first end projecting into a hollow (5') of the housing (1) and being sealed therein, **characterized in that** the lamina (6) is fixedly held in relation to the housing (1) during the sealing process and at the same time is mechanically and/or electrically loaded, whereby a defined mechanical prestress of the lamina is set for its initial position with no electrical voltage applied, in which it is in contact with the sealing seat (2, 3), or a defined distance of the lamina (6) from the sealing seat (2, 3) is set in the condition without an applied electrical voltage.

2. The method according to claim 1, **characterized in that** a channel (11) extends through a wall of the housing (1) approximately centrally above the lamina (6), that prior to the sealing process a pin-shaped element (13) is introduced through this channel for a defined bending stress on the lamina (6), and that following the solidification of the sealing compound (7) the channel (11) is closed so as to be pressure-sealed by means of a closure body (12) such as a ball (12) pressed in.

3. A method of producing a valve having a housing (1), at least one sealing seat (2, 3) formed therein, and a piezoelectric lamina (6) cantilevered at its first end on the housing (1), with its second end closing or opening the sealing seat (2, 3) depending on the control voltage applied to the lamina (6), and with its first end projecting into a hollow (5') of the housing (1) and being sealed therein, the lamina (6) being fixedly held in relation to the housing (1) during the sealing process, **characterized in that** following the solidification of the sealing compound (7) the lamina (6) is electrically loaded and thereby bent, that the sealing seat (2, 3) is mounted axially displaceably in the housing (1), that the sealing seat (2, 3) under a predetermined force contacts the other end of the lamina (6) or that the sealing seat (2, 3) in the case of a predetermined counterforce is displaced into a final position by the other end of the lamina (6), and that the sealing seat (2, 3) is closably rigidly fixed in place at the housing (1).

4. The method according to any of claims 1 to 3, **characterized in that** the lamina (6), along with a partition plate (10) closing the hollow (5') on its side facing the interior of the housing (1), a base (8') having holder slots for the first end of the lamina (6) and closing the hollow (5') that opens at the outer periphery of the housing (1), and connecting lines connected to contact pins (8), is inserted as a preassembled unit into the hollow (5') through an end thereof that is open at the periphery of the housing (1) as well as into the housing (1).

## Revendications

1. Procédé de fabrication d'une valve avec un boîtier (1), au moins un siège d'étanchéité (2, 3) formé dans celui-ci et une lamelle (6) piézoélectrique montée en porte-à-faux à sa première extrémité, dont la deuxième extrémité ferme ou libère le siège d'étanchéité (2, 3) selon la tension de commande appliquée à la lamelle (6) et dont la première extrémité fait saillie dans une cavité (5') du boîtier (1) et est scellée dans celle-ci, **caractérisé en ce que** la lamelle (6) est maintenue fixe par rapport au boîtier (1) pendant le scellement et est en même temps chargée mécaniquement et/ou électriquement, grâce à quoi une précontrainte mécanique définie de la lamelle est ajustée pour sa position initiale hors tension électrique, dans laquelle elle est en appui sur le siège d'étanchéité (2, 3), ou une distance définie de la lamelle (6) par rapport au siège d'étanchéité (2, 3) est ajustée dans l'état sans tension électrique appliquée.

2. Procédé selon la revendication 1, **caractérisé en ce qu'**environ au milieu au-dessus de la lamelle (6), un canal (11) s'étend à travers d'une paroi du boîtier (1), **en ce qu'**avant le scellement, un élément (13) en forme de pointe est introduit à travers ce canal pour une sollicitation en flexion définie de la lamelle (1), et **en ce qu'**après la solidification de la masse de scellement (7), le canal (1) est fermé de manière étanche à la pression au moyen d'un corps de fermeture (12) tel qu'une bille (12) pressée.

3. Procédé de fabrication d'une valve avec un boîtier (1), au moins un siège d'étanchéité (2, 3) formé dans celui-ci et une lamelle (6) piézoélectrique montée en porte-à-faux à sa première extrémité, dont la deuxième extrémité ferme ou libère le siège d'étanchéité (2, 3) selon la tension de commande appliquée à la lamelle (6) et dont la première extrémité fait saillie dans une cavité (5') du boîtier (1) et est scellée dans celle-ci, la lamelle étant maintenue fixe par rapport au boîtier (1) pendant le scellement, **caractérisé en ce qu'**après la solidification de la masse de scellement (7), la lamelle est chargée électriquement et par ce fait fléchie, **en ce que** le siège d'étanchéité (2, 3) est monté à déplacement axial dans le boîtier (1), **en ce que** le siège d'étanchéité (2, 3) est mis en appui par une force prédéterminée contre l'autre extrémité de la lamelle (6) et **en ce qu'**en présence d'une force antagoniste prédéterminée, il est déplacé par l'autre extrémité de la lamelle (6) jusque dans une position définitive, et **en ce que** le siège d'étanchéité (2, 3) est fixé de manière rigide sur le boîtier (1) en pouvant être obturé.

4. Procédé selon l'une des revendications 1 à 3, **caractérisé en ce qu'**avec une plaque de séparation (10) qui ferme la cavité (5') sur sa face située vers l'intérieur du boîtier (1), avec un socle (8') présentant des fentes de retenue pour la première extrémité de la lamelle (6), lequel ferme la cavité (5') débouchant sur la périphérie extérieure du boîtier (1), et avec des lignes de connexion reliées par des fiches de contact, la lamelle (6) est insérée sous forme d'ensemble préassemblé dans la cavité (5') ainsi que dans le boîtier (1) à travers une extrémité de la cavité, ouverte sur la périphérie du boîtier (1).
